# EUROPEAN PATENT SPECIFICATION

(11) **EP 0 475 102 B1**
(45) Date of publication and mention of the grant of the patent: **25.01.1995**
(21) Application number: 91113695.0
(22) Date of filing: 14.08.1991
(51) Int. Cl.: F01D 5/18, F01D 11/08, F01D 5/22

(54) **Apparatus and method for minimizing differential thermal expansion of gas turbine vane structures**
Einrichtung und Verfahren zur Reduzierung unterschiedlicher thermischer Ausdehnung bei Gasturbinenschaufeln
Appareil et méthode pour minimiser l'expansion thermique différentielle des aubes de turbine à gaz

(30) Priority: 10.09.1990 US 580060
(43) Date of publication of application: 18.03.1992
(73) Proprietor: WESTINGHOUSE ELECTRIC CORPORATION, Pittsburgh Pennsylvania 15222 (US)
(72) Inventor: Hultgren, Kent Goran, Winter Park, Florida 32789 (US); Matarazzo, John Carmine, Orlando, Florida 32817 (US)
(74) Representative: Fleuchaus, Leo, Dipl.-Ing.

(56) References cited:
- DE-A- 2 847 013
- FR-A- 2 359 976
- GB-A- 2 053 367
- GB-A- 2 104 965
- US-A- 3 314 648
- US-A- 4 826 397

## Description

The present invention relates to gas turbines. More specifically, the present invention relates to an apparatus and method for minimizing differential thermal expansion in gas turbine vane segments, especially differential thermal expansion in external structures which form cooling air passageways on the vane segments.

A portion of the annular gas flow path in the turbine section of a gas section is formed by a plurality of vane segments circumferentially arrayed around the rotor. Each vane segment is comprised of an inner and an outer shroud, which together form the boundaries of the gas flow path, and one or more vanes.

In order to insure that the material forming the vane segments is not overheated, thereby compromising its strength, the vane segments of modern gas turbines are cooled with air bled from the compressor section. This cooling air is often supplied to both the inner and outer shrouds, from which it is distributed throughout the vane segments. In order to effectively utilize this cooling air, external structures are formed on the vane segment shrouds to contain and distribute the cooling air. Typically, these structures are attached to the surfaces of the shrouds opposite the surfaces exposed to the hot gas flowing through the turbine section. An example of such an arrangement is disclosed in the document FR2359976.

As previously discussed, structures which contain and distribute cooling air to the vane segment shrouds are typically affixed to the surface of the shrouds opposite those surfaces exposed to the hot gas flowing through the turbine section. These structures are referred to as "external" cooling air structures to distinguish them from structures for distributing cooling air which are formed inside the airfoil portions of the vane segments. During operation, the shrouds get very hot as a result of the flow of the hot gas over them. The structures, however, have cooling air flowing over them and hence do not get nearly as hot as the shrouds. As a result, severe thermal stresses are induced in the structures due to the differential thermal expansion between the shroud and the structure.

According to the prior art, the thermal stresses were reduced by forming the structures from thin plates, thereby making them as flexible as possible. However, a minimum amount of strength and stiffness is necessary to ensure that the structures can withstand the pressure of the cooling air inside them. As a result of this trade off between strength and flexibility, the prior art approach has yielded less than optimum results.

In the past, certain components exposed to hot gas flow in the combustion section of a gas turbine, such as combustors or transition ducts, have been formed from laminates. The laminates themselves are formed by joining two thin plates in a sandwich-like fashion. Typically, one or more internal passageways, in a straight through or serpentine arrangement, are formed between the layers of the laminate. Cooling air flows through these internal passageways and cools the component. According to the present invention, novel use is made of such laminates by forming vane segment external cooling air structures from them. Rather than using the internal passageways for cooling purposes, hot gas flowing over the shrouds is directed through the internal passageways. The flow of hot gas heats the structures, thereby minimizing the differential thermal expansion between them and the shrouds to which they are attached.

The principal object of the current invention is to provide an apparatus and method for minimizing the differential thermal expansion between vane segment external cooling air structures and the shrouds to which they are attached in the turbine section of a gas turbine so as to minimize thermal stresses.

With this object in view, the present invention resides in a gas turbine having a plurality of vane segments, each of said vane segments having a shroud, a duct directing a hot gas to flow through the vanes over a first surface of said shroud, and a containment structure for containing and distributing cooling air characterized in that said containment structure consists of a first layer and a second layer joined to form a laminate structure, which is attached to a second surface of each of said shrouds and has first passageways disposed between said first and second layers, each of said first passageways having an inlet and an outlet, in flow communication with a plurality of second passageways formed in said shrouds for directing a portion of said hot gas to said first passageways.

In this manner, hot gas passageways are formed between the layers, thereby minimizing the differential thermal expansion between the structure and the inner shroud to which it is attached.

The invention will become more readily apparent from the following description of a preferred embodiment thereof shown, by way of example only, in the accompanying drawings, wherein:
Figure 1 is an isometric view, partially cut away, of a gas turbine.
Figure 2 is a cross-section of a portion of the turbine section of the gas turbine in the vicinity of the row 1 vanes.
Figure 3 is a cross-section taken through line III-III, shown in Figure 2, showing the containment cap formed on the inner shroud.
Figure 4 is a cross-section taken through line IV-IV, shown in Figure 3.
Figure 5 is a cross-section taken through line V-V, shown in Figure 4, showing two adjacent vane segments.
Figure 6 is a plan view of one of the plates forming a laminate from which the containment cap is formed. Two embodiments of the gas flow path arrangement are shown, a serpentine arrangement (a) and a straight-through arrangement (b).

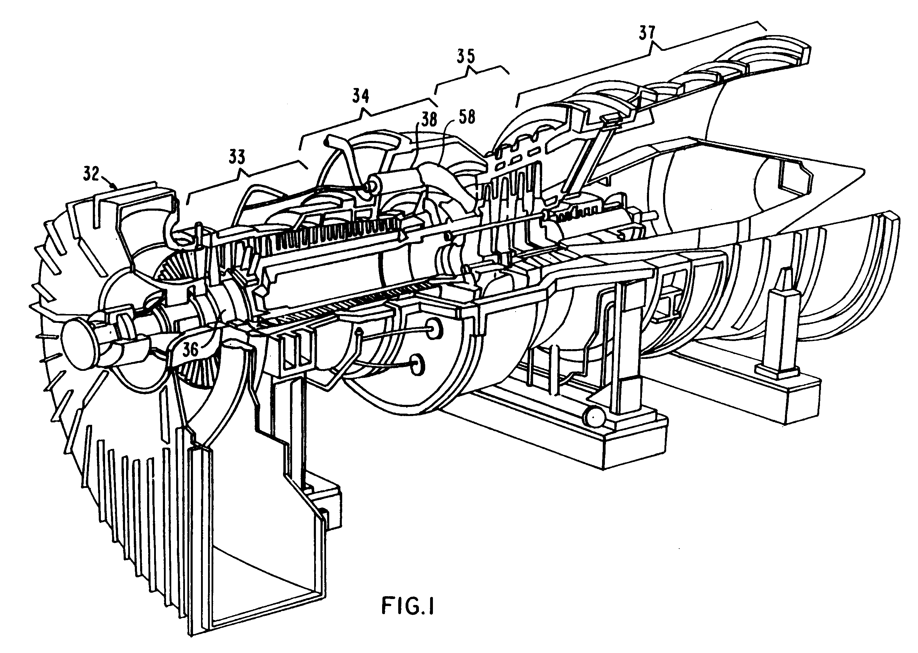

There is shown in Figure 1 a gas turbine. The major components of the gas turbine are the inlet section 32, through which air enters the gas turbine; a compressor section 33, in which the entering air is compressed; a combustion section 34 in which the compressed air from the compressor section is heated by burning fuel in combustors 38, thereby producing a hot compressed gas; a turbine section 35, in which the hot compressed gas from the combustion section is expanded, thereby producing shaft power; and an exhaust section 37, through which the expanded gas is expelled to atmosphere. A centrally disposed rotor 36 extends through the gas turbine.

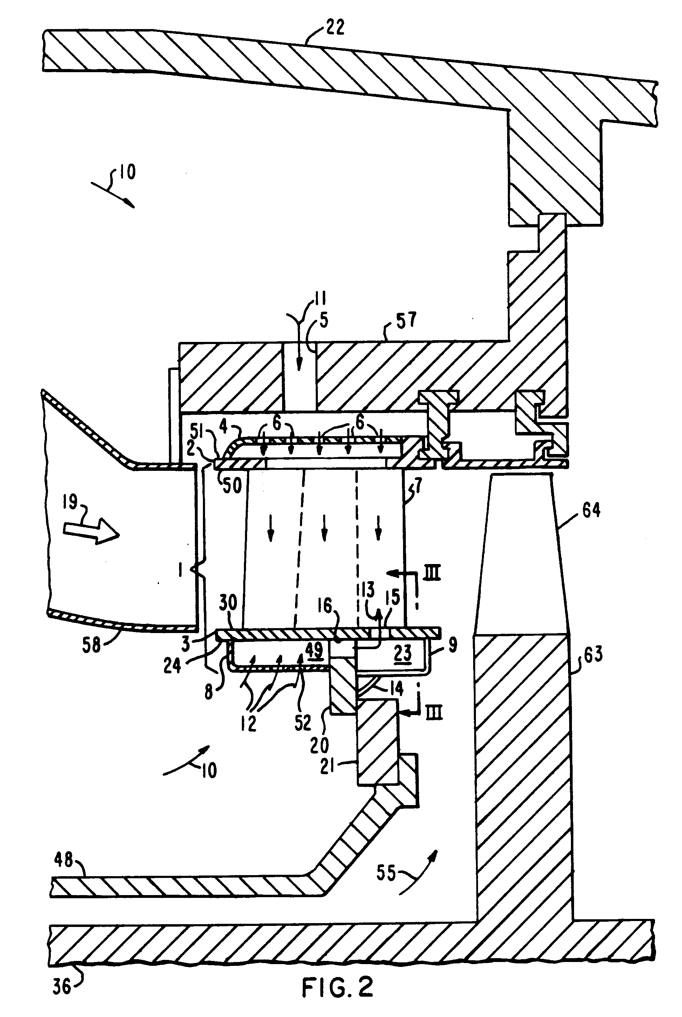

The turbine section 35 of the gas turbine is comprised of alternating rows of stationary vanes and rotating blades. Each row of vanes is arranged in a circumferential array around the rotor 36. Figure 2 shows a portion of the turbine section in the vicinity of the row 1 vane assembly. Typically, the vane assembly is comprised of a number of vane segments 1. Each vane segment 1 is comprised of a vane airfoil 7 having an inner shroud 3 formed on its inboard end and an outer shroud 2 formed on its outboard end. Alternatively, each vane segment may be formed by two or more vane air foils having common inner and outer shrouds.

As shown in Figure 2, the vane segments 1 are encased by a cylinder 57, referred to as a blade ring. Also, the vane segments encircle an inner cylinder structure 48. The inner cylinder structure comprises a ring 21 affixed to a rear flange of the inner cylinder. A row of rotating blades 64, affixed to a disk portion 63 of the rotor 36, is disposed downstream of the stationary vanes. A turbine outer cylinder 22 encloses the turbine section.

During operation, hot gas 19 from the combustion section 34 is directed to flow over the vane segments 1 by duct 58. The flow of hot gas 19 is contained between the outboard surface 30 of the inner shroud 3 and the inboard surface 50 of the outer shroud 2.

Cooling air 10 is bled from the compressor section, thus bypassing the combustors 38, and is supplied to the inner and outer shrouds.

A portion 11 of the cooling air 10 flows through hole 5 in the blade ring 57, from whence it enters the vane segment 1 through hole 6 formed in an external cooling air structure 4, referred to as an outer shroud impingement plate. The outer shroud impingement plate 4 is affixed to the outboard surface 51 of the outer shroud 2. From the impingement plate 4, the cooling air 11 flows through the vane air foil 7 and discharges into the hot gas 19 through holes (not shown) in the walls of the airfoil portion of the vane segment.

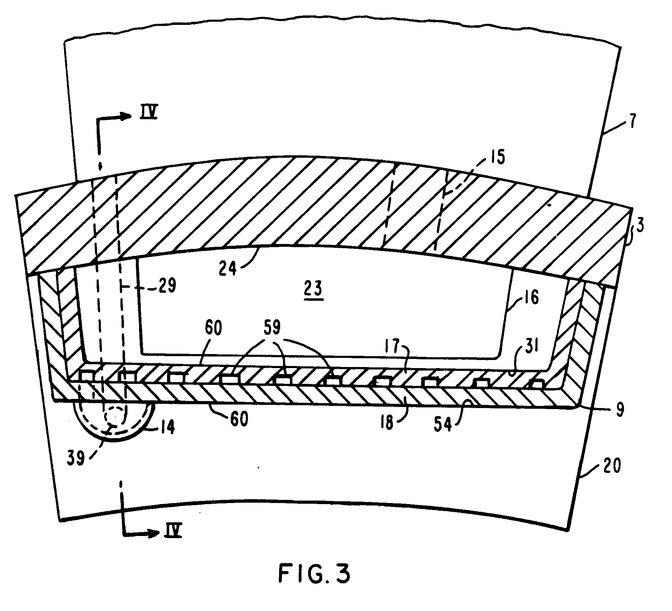

A portion 12 of the cooling air 10 flows through holes 52 formed in a second external cooling air structure 8, referred to as an inner shroud impingement plate. The inner shroud impingement plate 8 is affixed to the inboard surface 24 of the inner shroud 3. A lug 20 emanates radially inward from the inboard surface 24 of the inner shroud 3, and serves to prevent leakage of cooling air 10 to the turbine section by bearing against the ring 21. The inner shroud impingement plate 8 forms a passageway 49 through which the cooling air 12 flows. From passageway 49, the cooling air flows through opening 16 in the lug 20 and enters a third external cooling air structure 9, referred to as a containment cap. The containment cap 9 is affixed to the inboard surface 24 of the inner shroud 3. As shown in Figure 3, the inner surface 31 of the containment cap 9 and the inboard surface 24 of the inner shroud form a passageway 23 through which cooling air 13 flows. From passageway 23, the cooling air 13 flows into the airfoil portion of the vane through a hole 15 in the inner shroud and eventually discharges into the hot gas 19 through holes, not shown, in the walls of the airfoil and through passageways, not shown, in the trailing edge of the airfoil.

Cooling air 55, which is also bled from the compressor section, flows through the rotor 36. This cooling air flows over the upstream face of the disk 63 and over the containment cap 9 before discharging into the hot gas 19 flowing over the inner shroud.

As previously discussed, hot gas 19 from the combustion system flows over the outboard surface 30 of the inner shroud 3 and the inboard surface 50 of the outer shroud 2. The temperature of the hot gas flowing over the shrouds is typically approximately 900°C (1650°F). On the surfaces 24 and 51, opposite the surfaces exposed to the hot gas, the shrouds are exposed to the cooling air 6, 12, 13, which is typically at a temperature of approximately 400°C (750°F). As a result, the average temperature of the shrouds themselves is approximately 700°C (1300°F). In contrast to the shrouds, the surfaces of the external cooling air structures, such as surfaces 31 and 54 of the containment cover 9, are exposed to cooling air on both their inboard and outboard surfaces. Thus, in the absence of any purposeful heat up, the temperature of the structures is approximately the temperature of the cooling air, i.e. 400°C (750°F). As a result of the large temperature difference between the shrouds and the external cooling air structures, there is considerable differential thermal expansion between the two components, giving rise to large thermal stresses. The present invention concerns an apparatus and method for minimizing the differential thermal expansion between the containment cap 9 and the inner shroud 3 by purposeful heating of the containment cap.

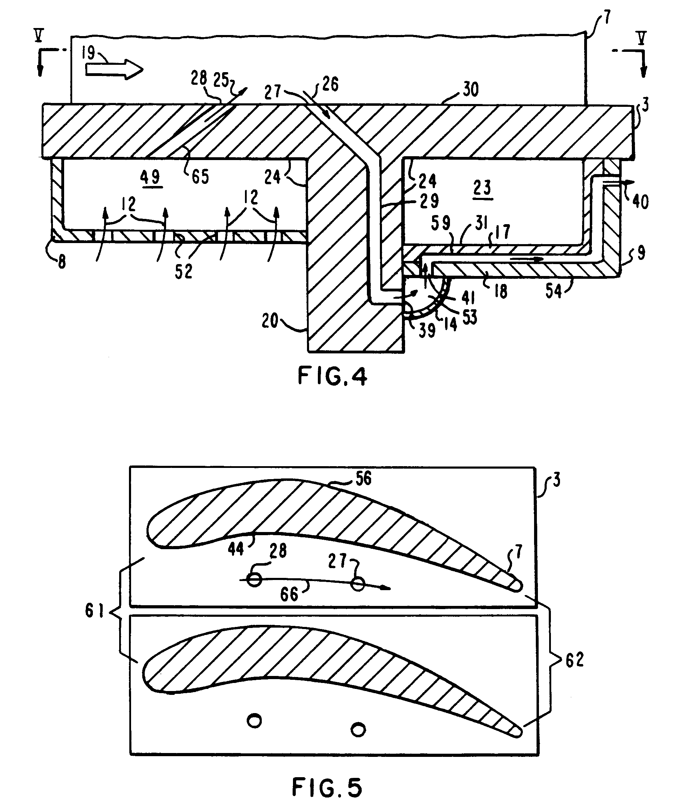

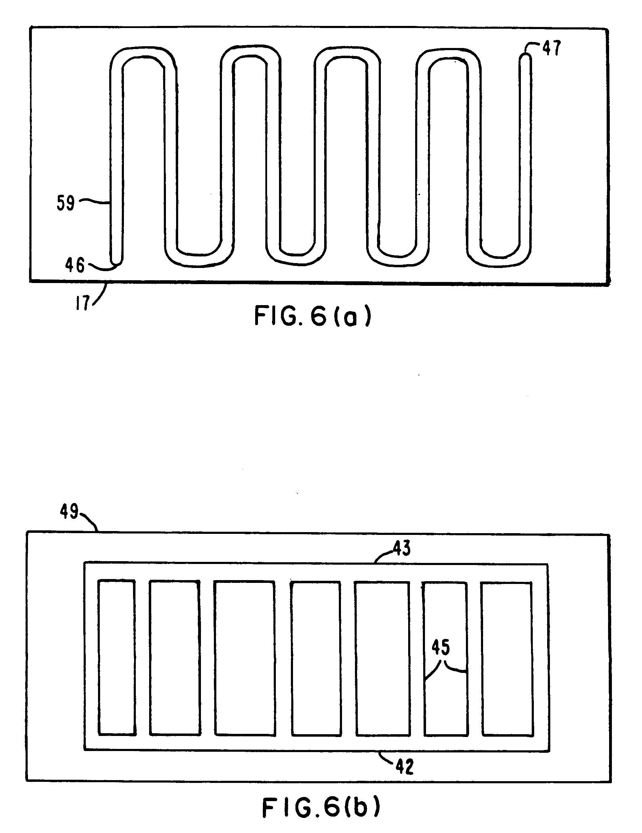

As shown in Figures 3 and 4, according to the present invention, a passageway 59 is formed between the inner surface 31 and the outer surface 54 of the containment cap 9. In the preferred embodiment, the passageway 59 is created by forming the containment cap 9 from a laminate comprised of two layers 17, 18 of thin plates, joined along their surfaces in a sandwich-like fashion by brazing or diffusion bonding. In the preferred embodiment, each layer 17, 18 is approximately 0.076 cm (0.030 inch) thick. The passageway 59 is formed between the two layers 17, 18. Layer 17 of the laminate is shown in Figure 6 prior to being shaped into the containment cap 9. In the preferred embodiment, the passageway 59 is comprised of a groove machined into the surface along which layer 17 is joined to layer 18. The passageway 59 is formed in a serpentine arrangement, as shown in Figure 6(a), having two ends 46 and 47. As a result of the multiple passes associated with the serpentine arrangement, even heating is obtained throughout the containment cap 9. Alternatively, two or more serpentine passageways could be formed side by side in the plate, each having its own ends. Moreover, a laminate layer 49 having a straight-through flow path, such as that shown in Figure 6(b), could be utilized. In this case, passageways 42 and 43 form inlet and outlet manifolds, respectively. A series of parallel flow paths 45 connect the inlet and outlet manifolds.

As shown in the preferred embodiment, passageway 59 is formed by grooves in only the outboard layer 17 of the laminate. However, the passageway could also formed by grooves in the inboard layer 18 or mating grooves in both layers. In the preferred embodiment, the depth of the groove is approximately one-half the thickness of the layer 17 and the pitch of the grooves is approximately twice their width, thereby ensuring adequate and even heating of the entire surface of the containment cap.

As shown in Figure 4, a passageway 29 is formed in the inner shroud. The inlet 27 to the passageway is disposed on the outboard surface 30 of the inner shroud and the outlet 39 is disposed on the downstream face of the lug portion 20 of the inner shroud. A portion 26 of the hot gas 19 flowing over the outboard surface 30 of the inner shroud enters inlet 27, flows through passageway 29 and discharges at outlet 39. From the outlet 39, the hot gas 26 flows into a cavity 53, formed by a plate 14 affixed to the outer surface 54 of the containment cap 9 and the lug 20. From cavity 53, the hot gas flows through an opening 41 in layer 18 of the laminate. The opening 41 is aligned with the end 46 of the serpentine, shown in Figure 6(a), so that opening 41 forms the inlet to the passageway 59. A second opening 40 is formed in layer 18 and is aligned with end 47 of the serpentine, thus forming the outlet of the passageway 59. The hot gas 26 flows through the passageway and discharges through opening 40 into the hot gas 19 flowing downstream of the inner shroud. In the alternative arrangement shown in Figure 6(b), the inlet 41 and outlet 40 are connected to the inlet manifold 42 and outlet manifold 43, respectively.

The pressure of the hot gas 19 decreases as it flows through the turbine section as a result of the expansion it undergoes therein. As can be seen in Figure 5, the flow area at the outlets 62 to the vane segments is greater than the flow area at their inlets 61. Thus, the pressure of the hot gas flowing over the upstream portion of the inner shroud - that is, the portion nearer the vane segment inlet 61 - is greater than the hot gas flowing over the downstream portion of the shroud - that is, the portion nearer the vane segment outlet 62. Since opening 27 to passageway 29 is formed in the upstream portion of the inner shroud and outlet 40 discharges into the hot gas 19 flowing over the downstream portion of the shroud, a pressure differential exists which induces the flow of the hot gas 26 through passageways 29 and 59. Moreover, as shown in Figure 4, the initial portion of passageway 29 is inclined at an angle toward the upstream axial direction so as to better receive the flow of hot gas.

Since, as previously discussed, the temperature of the hot gas 19 flowing over the outboard surface 30 of the inner shroud is approximately 900°C (1650°F) range, whereas the temperature of the inner shroud is only 700°C (1300°F), there is a danger that the flow of hot gas 26 through the laminate will raise the temperature of the containment cap excessively. Excessive heating of the containment cap would weaken the laminate, thereby reducing its ability to withstand the pressure associated with the cooling air 13 flowing within the containment cap. In addition, excessive heating may create additional thermal stresses in the opposite direction - that is, the containment cap would attempt to expand more than the inner shroud. Thus, in the preferred embodiment, the temperature of the hot gas 26 flowing into passageway 29 is modulated. Modulation is accomplished by a hole 65 formed in the inner shroud upstream of the inlet 27 to passageway 29, as shown in Figure 4. Hole 65 extends from the inboard to the outboard surface of the inner shroud and directs a portion 25 of the cooling air 12 flowing through passageway 49 into the hot gas 19 flowing over the inner shroud so that the temperature of the hot gas 26 flowing into passageway 29 is reduced. By properly sizing the hole 65, the temperature of the gas 26 flowing through the laminate can be modulated so as to ensure that the containment cap 9 operates in the appropriate temperature range necessary to maintain adequate strength and minimize differential thermal expansion.

As shown in Figure 5, the airfoil portion 7 of the vane segment has convex 56 and concave 44 surfaces. As a result of their shape, these surfaces direct the flow of the hot gas 19 through the vane segments along direction 66. In the preferred embodiment, the outlet 28 to hole 65 is aligned upstream from inlet 27 to passageway 29 along direction 31, thereby ensuring adequate mixing between the cooling air 12 and the hot gas 19 before the hot gas 26 enters the inlet 27.

Lastly, in the preferred embodiment, a thermal barrier coating 60, such as a ceramic type well known to those in the art, is applied to the inner surface 31 and outer surface 54 of the containment cap 9, as shown in Figure 3. The thermal barrier coating retards the conduction of heat from the layers 17, 18 to the cooling air 13, 55, thereby avoiding the unnecessary heat-up of the cooling air 13 and ensuring that the hot gas 26 flowing through passageway 59 adequately heats the containment cap.

Although the above description has been directed to a containment cap on the inner shroud of a vane segment, the principles disclosed herein are equally applicable to other structures formed on gas turbine members which are susceptible to excessive differential thermal expansion as a result of their being cooler than the members to which they are attached. Moreover, it is understood that although the above description has been directed to a preferred embodiment of the invention, other modifications and variations known to those skilled in the art may be made without departing from the scope of the invention as set forth in the appended claims. Thus, the invention is applicable to any containment vessel, or channel, whether in a turbine environment or otherwise, wherein a cooling medium such as air passes through the vessel and the outside of the vessel is heated to a higher temperature. In such a situation, the invention embraces a passageway through at least a part of the second element, and means for controllably passing some of the heating medium, such as hot gas that is outside of the vessel or channel, through said passageway, thereby diminishing or modulating the temperature differentials around the containment area.

## Claims

1. A gas turbine having a plurality of vane segments (1), each of said vane segments (1) having a shroud (3), a duct (58) directing a hot gas (19) to flow through the vanes (7) over a first surface (30) of said shroud (3), and a containment structure (9) for containing and distributing cooling air (13) characterized in that said containment structure (9) consists of a first layer (17) and a second layer (18) joined to form a laminate structure (9), which is attached to a second surface (24) of each of said shrouds (3) and has first passageways (59) disposed between said first and second layers (17, 18), each of said first passageways (59) having an inlet (41) and an outlet (40), in flow communication with a plurality of second passageways (29) formed in said shrouds (3) for directing a portion (26) of said hot gas (19) to said first passageways (59).

2. A gas turbine according to claim 1, characterized in that each of said first passageways (59) is in a serpentine arrangement.

3. A gas turbine according to claim 2 characterized by means for directing cooling air (12) to said second surfaces (24) of said shrouds (3) including for each of said second passageways (29), holes (65) formed in one of said shrouds (3), each of said holes (65) directing a portion (25) of said cooling air (12) to the portion (26) of said hot gas (19) entering said inlet (41).

## Patentansprüche

1. Eine Gastrubine mit einer Vielzahl von Leitschaufelsegmenten (1), wobei jedes Leitschaufelsegment ein Deckband (3), einen Kanal (58), der einen Heißgasstrom (19) durch die Leitschaufeln (7) über eine erste Fläche (30) dieses Deckbands (3) leitet, und eine Einschließungsstruktur (9) zur Aufnahme und Verteilung von Kühlluft (13) aufweist, dadurch gekennzeichnet, daß diese Einschließungsstruktur (9) aus einer ersten (17) und einer zweiten Schicht (18) besteht, die zur Bildung einer Laminatstruktur (9) miteinander verbunden sind, die an einer zweiten Fläche (24) jedes der Deckbänder (3) befestigt ist und erste Strömungswege (59) aufweist, die zwischen der ersten und der zweiten Schicht (17, 18) angeordnet sind, wobei jeder erste Strömungsweg (59) einen Eingang (41) und einen Ausgang (40) in Strömungsverbindung mit einer Vielzahl von zweiten Strömungswegen (29) hat, die in den Deckbändern (3) zur Leitung eines Teils (26) dieses Heißgases (19) zu den ersten Strömungswegen (59) ausgebildet sind.

2. Eine Gasturbine gemäß Anspruch 1, dadurch gekennzeichnet, daß jeder erste Strömungsweg (59) schlangenförmig angeordnet ist.

3. Eine Gasturbine gemäß Anspruch 2, gekennzeichnet durch Mittel zum Leiten von Kühlluft (12) auf die zweiten Flächen (24) der Deckbänder (3) einschließlich, für jeden der zweiten Strömungswege (29), Löcher (65), die in einem der Deckbänder (3) ausgebildet sind, wobei jedes dieser Löcher (65) einen Teil (25) der Kühlluft (12) zum Teil (26) des in den Einlaß (41) eintretenden Heißgases (19) richtet.

## Revendications

1. Turbine à gaz comportant une pluralité de segments d'aube (1), chaque segment d'aube (1) comprenant une enveloppe (3), un conduit (58) qui dirige un gaz chaud (19) afin qu'il circule à travers les aubes (7) sur une première surface (30) de ladite enveloppe (3), et une structure de confinement (9) destinée à contenir et répartir de l'air de refroidissement (13),
caractérisée en ce que ladite structure de confinement (9) est faite d'une première couche (17) et d'une seconde couche (18) réunies pour former une structure stratifiée (9), laquelle est fixée à une seconde surface (24) de chacune desdites enveloppes (3) et comporte des premières voies de passage (59) placées entre lesdites première et seconde couches (17, 18), chaque première voie de passage (59) ayant une entrée (41) et une sortie (40), en communication d'écoulement avec une pluralité de secondes voies de passage (29) formées dans lesdites enveloppes (3) pour diriger une partie (26) dudit gaz chaud (19) vers lesdites premières voies de passage (59).

2. Turbine à gaz selon la revendication 1, caractérisée en ce que chacune desdites premières voies de passage (59) a une disposition en serpentin.

3. Turbine à gaz selon la revendication 2, caractérisée par des moyens pour diriger de l'air de refroidissement (12) vers lesdites secondes surfaces (24) desdites enveloppes (3) qui comprennent, pour chacune desdites secondes voies de passage (29), des trous (65) formés dans l'une desdites enveloppes (3), chaque trou (65) dirigeant une partie (25) dudit air de refroidissement (12) vers la partie (26) dudit gaz chaud ( 19) qui pénètre dans ladite entrée (41).
